# EUROPEAN PATENT APPLICATION

(11) **EP 1 093 090 A1**
(43) Date of publication of application: **18.04.2001**
(21) Application number: 00420199.2
(22) Date of filing: 28.09.2000
(51) Int. Cl.: G06T 15/20

(54) **Digital photograph album**

(30) Priority: 13.10.1999 FR 9913047
(71) Applicant: EASTMAN KODAK COMPANY, Rochester, New York 14650 (US)
(72) Inventor: Ricard, Laurent Pierre, c/o Kodak Industrie, 71102 Chalon sur Saone Cedex (FR); Vau, Jean-Marie, c/o Kodak Industrie, 71102 Chalon sur Saone Cedex (FR); Touchard, Nicolas Patrice B., c/o Kodak Industrie, 71102 Chalon sur Saone Cedex (FR); Robinson, Guy, c/o Kodak Limited, Harrow, Middlesex HA1 4TY (GB)
(74) Representative: Leray, Noelle

(57) **Abstract**

The present invention relates to a digital photograph album able to be displayed on any type of screen.

The album comprises a three-dimensional virtual environment 10, means for enabling an observer to move about in the three-dimensional environment 10, and means for integrating in the three-dimensional environment 10 two-dimensional images 20 coming from a database external to the three-dimensional environment.

## Description

### FIELD OF THE INVENTION

The present invention relates to a digital photograph album able to be displayed on any type of screen.

### BACKGROUND OF THE INVENTION

Conventional photograph albums comprise media on which photographs are arranged to choice. Generally, it is very difficult to change the arrangement of the photographs once they have first been put into a particular layout. In addition, such albums are looked at by turning the pages containing the photographs, which is not very entertaining and can be rather cumbersome. Further, it is necessary to transport such albums with oneself if you wish to show them to somebody else.

There already exist media for digitally recording photographs, such as for example, photo CDs, diskettes or computer hard disks. The photographs are simply recorded and they can be looked at on a screen without being integrated into a particular environment. In this case again, it is not very entertaining to look at these photographs.

### SUMMARY OF THE INVENTION

An object of the invention is an album that enables photographs to be looked at in a friendly and amusing way.

Another object of the invention is an album whose photographic arrangement can be easily changed.

Another object of the invention is an album that can easily be looked at by several people in an entertaining way.

The present invention relates to a digital photograph album comprising a three-dimensional virtual environment. The album comprises an interface device for enabling an observer to move about in the three-dimensional environment, and a device for integrating in the three-dimensional environment digital images in two-dimensions coming from a database external to the three-dimensional environment.

### BRIEF DESCRIPTION OF THE DRAWINGS

Other characteristics will appear on reading the description that follows, with reference to the drawing wherein:
Figure 1 represents an illustration of an album according to the invention; and
Figure 2 schematically illustrates the album and a control arrangement according to the invention.

### DETAILED DESCRIPTION OF THE INVENTION

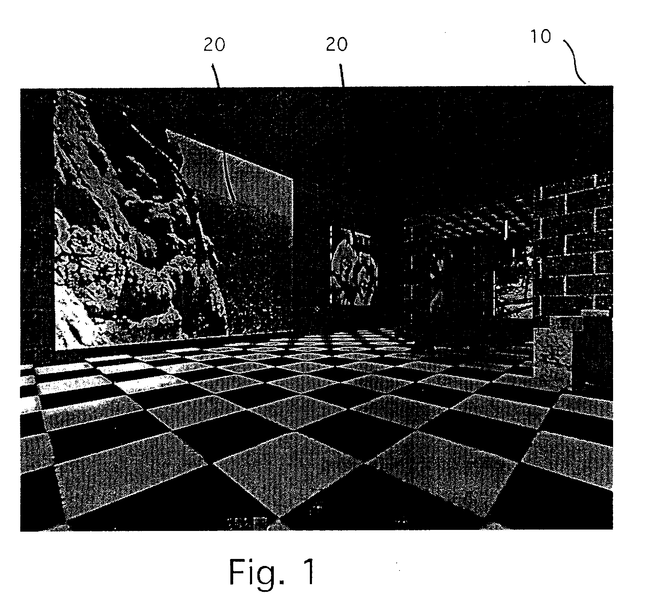

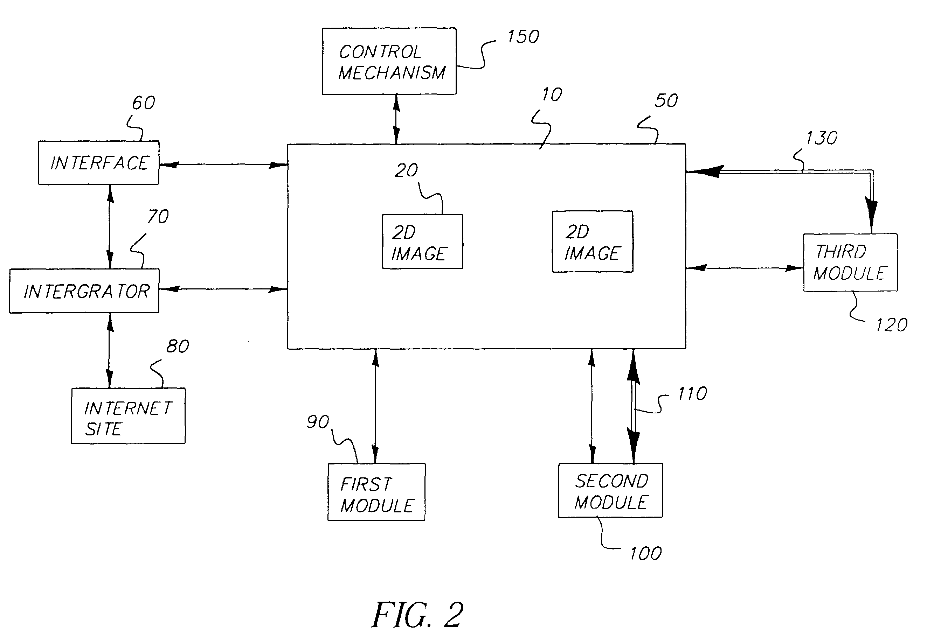

The album according to the invention of which an illustration is represented on figure 1 is a digital album comprising a three-dimensional virtual environment 10. The album and control arrangement schematically illustrated on figure 2 can be displayed on any type of screen 50, for instance a computer or television screen, games console, etc. The album comprises a device or means 60, such as a navigation interface, for enabling an observer to move about in the three-dimensional environment. To navigate or move in the environment, the navigation interface used can be, for instance, a mouse, a keyboard, a joystick or an interface based on the movement of the hand or body.

The three-dimensional environment is composed of three-dimensional images 10, i.e. images giving the impression of relief. The images used have been produced previously in two stages. They were first modeled utilizing various techniques, for instance a wireframe representation, by polygons, by volumes or again by surfaces. Rendering of the image was then prepared by removing for example hidden parts of the image, by reproducing the shadows, the texture, etc. By using such images in a three-dimensional environment, they can be modified according to the movement given by the user at the navigation interface 60, so that the observer has the impression of moving about in the environment. It is clear that two-dimensional images 20 that are to be integrated will also be distorted according to the movement of the navigation interface 60.

The album also comprises a device or means 70 for integrating the two-dimensional images 20 in the three-dimensional environment 10. Users will choose zones of the three-dimensional environment in which they wish to integrate their images. For this purpose, they will use an interface enabling these zones to be defined in three-dimensions on the three-dimensional environment. Each two-dimensional image is then "painted" onto the defined zone by assigning the pixel texture of the two-dimensional image to the representation of the images in three-dimensions. For example, integrating device 70 comprises a computing platform with a pointing device and a data storage device allowing the three-dimensional environment to be built from primitives, viewed from different perspectives and saved onto the data storage device. According to an alternative, the integrating device 70 is a console application associated with a gamepad.

The two-dimensional images 20 come from a database external to the three-dimensional environment. For example two-dimensional images can be integrated coming directly from a digital camera. Personal images recorded on a photo CD, DVD or any other known media can also be integrated. Images coming from an Internet site 80 on which these images have been stored, e.g. a Photonet® type site, can also be integrated.

According to a first embodiment, the album comprises a first module 90 that enables the three-dimensional environment to be modified. This module is a software which can for instance enable the environment architecture to be changed, i.e. to enlarge or reduce the environment. When an environment such as a building, for instance a house, museum, etc. is used, rooms can be added or removed, or again dimensions of a room can be changed, etc. The module can also enable decoration to be changed. For example appearance of a wall can be changed or decorative objects can be added such as vases, tables or any other object, or room lighting can be changed. The module can also enable addition of sound to the album, e.g. music. For instance, sound can be arranged to be added in only one zone of the album, e.g. in a room, or different sounds in different zones of the album. All these environmental modifications enable the album to be personalized, and especially for it to be adapted to the two-dimensional images to be integrated.

According to another embodiment, a second module 100 is arranged that enables the three-dimensional environment to be generated automatically according to data 110 associated with the two-dimensional images that are to be integrated. Such data 110 called metadata is recorded when the two-dimensional images are shot and is associated with these images. For example data about the place of the shot using for instance a GPS, date, reference of the film used, shooting conditions, etc. can be recorded. The second module lets the user choose one or more items of metadata associated with the two-dimensional images according to which the three-dimensional environment will automatically be generated. For example, the environment can be chosen to be created according to the number of photographs to be integrated which will automatically generate a number of rooms sufficient to integrate these images. Also metadata relating to the place where the photographs were shot can also be arranged to be used so as to generate for example a three-dimensional environment representing the corresponding geographic site, e.g. on a relief map.

According to another embodiment, the album comprises a third module 120 enabling two-dimensional images to be automatically arranged according to a layout that is a function of metadata 130 associated with the images defined previously. For example the images are arranged on a three-dimensional representation of corresponding geographic site, e.g. a relief map, in places of the map more or less corresponding to the real places where they were shot. Also the date can be used to automatically construct the album according to a chronological order. According to another particular embodiment, all the images coming from the same film are integrated in the same room when the three-dimensional environment is a building.

According to another embodiment, the photograph album can be accessed by an Internet type network in such a way as to enable the album to be visited by anybody.

According to another embodiment, the album comprises an access control mechanism 150 enabling the access to one or more zones of the environment to be managed. If for example the environment is a building comprising several rooms, access to one or more rooms may be permitted only by means of an access key. Such protected access is for instance represented in the form of a secret passage or a door with a key, etc. Thus, the person who created the album defines zones that can only be visited with their permission. For this purpose, an access key will for example be necessary to access such zones. For instance it can be arranged that the person gives invitation cards including the access code to certain people to come and visit the album. Alternatively, the identity of the person wishing to enter the album can be recorded, and access given only when they have been authorized to enter it.

According to a particular embodiment of the invention especially useful when the album is accessible by Internet, a further module is planned that enables people who move about in the album to be represented. For instance a representation of each identified person is used, e.g. by means of an avatar. For example each person moving about in the album is represented by a default representation or again, if a person present is assigned an avatar, they are represented by this avatar. It can also be arranged to identify the addresses of the people present in the album so as to be able to communicate with them. Alternatively, for example a visual system is used to enable the various people present in the album to communicate.

According to one embodiment, access is arranged to the databases where information linked to the geographic region in which the two-dimensional images were shot. Then for instance the metadata relating to the place where the images were shot can be used to create a link with a site where there are images representing the region or publicity about the activities in the region. Also it can be arranged that the information about the region is displayed directly in the album when place data is associated with the images. For example the three-dimensional environment could integrate three-dimensional images representing tourist sites of the region.

All the embodiments that have just been described can be produced independently. Also several or all these embodiments can be combined in the same album.

## Claims

1. A digital photograph album comprising a three-dimensional virtual environment (10), the album comprising means for enabling an observer to move about in the three-dimensional environment (10), and means for integrating in the three-dimensional environment (10) two-dimensional digital images (20) coming from a database external to the three-dimensional environment (10).

2. An album according to Claim 1 further comprising a module for enabling the three-dimensional environment (10) to be modified.

3. An album according to Claim 2 wherein the module enables the decoration of the three-dimensional environment (10) to be changed.

4. An album according to any one of the previous claims which further comprises a module for enabling the three-dimensional environment (10) to be modified according to metadata associated with the two-dimensional images (20).

5. An album according to any one of the claims 2 to 4 wherein module enables the addition of sound to the environment (10).

6. An album according to any one of the previous claims which further comprises a module for enabling the automatic arrangement of the two-dimensional images (20) according to a configuration that is a function of metadata associated with the two-dimensional images (20).

7. An album according to any one of the claims 2 to 7 which further comprises an access control mechanism for enabling access to be managed in at least one zone of the three dimensional environment (10).

8. An album according to any one of the previous claims which further comprises a module for enabling a person who moves about in the album to be represented.
